# EUROPEAN PATENT APPLICATION

(11) **EP 4 818 895 A1**
(43) Date of publication of application: **07.10.2026**
(21) Application number: 24911193.1
(22) Date of filing: 25.12.2024
(51) Int. Cl.: G06F 9/455

(54) **SERVICE INSTANCE MANAGEMENT METHOD BASED ON CLOUD TECHNOLOGY, CLOUD MANAGEMENT PLATFORM, AND CLUSTER**

(30) Priority: 25.12.2023 CN 202311797508; 06.03.2024 CN 202410256871
(71) Applicant: Huawei Cloud Computing Technologies Co., Ltd., Gui'an New District, Guizhou 550025 (CN)
(72) Inventor: YE, Hui, Guiyang, Guizhou 550025 (CN); CAO, Yu, Guiyang, Guizhou 550025 (CN); GONG, Zhe, Guiyang, Guizhou 550025 (CN)
(74) Representative: Pfenning, Meinig & Partner mbB
(86) International application number: PCT/CN2024/142182
(87) International publication number: WO 2025/140269

(57) **Abstract**

This application provides a cloud technology-based service instance management method, a cloud management platform, and a cluster. The method includes: The cloud management platform receives event information sent by a first physical machine among a plurality of physical machines, where the event information includes an expected execution time of an operation, and the operation affects a status of a first resource node in the first physical machine; and the cloud management platform migrates, based on a QoS requirement for a service instance in the first resource node before the expected execution time, the service instance from the first resource node to a second resource node in a second physical machine among the plurality of physical machines. According to the method, the QoS of the service instance can be prevented from being affected by the operation on a resource node in which the service instance is located.

## Description

This application claims priorities to Chinese Patent Application No. 202311797508.4, filed with the China National Intellectual Property Administration on December 25, 2023 and entitled "FAULT MANAGEMENT SYSTEM", and to Chinese Patent Application No. 202410256871.3, filed with the China National Intellectual Property Administration on March 6, 2024 and entitled "CLOUD TECHNOLOGY-BASED SERVICE INSTANCE MANAGEMENT METHOD, CLOUD MANAGEMENT PLATFORM, AND CLUSTER", both of which are incorporated herein by reference in their entireties.

### TECHNICAL FIELD

This application relates to the field of cloud computing, and in particular, to a cloud technology-based service instance management method, a cloud management platform, and a cluster.

### BACKGROUND

In the field of cloud computing, service instances such as containers (containers) are created on resource nodes, for example, physical machines or virtual machines (virtual machines, VMs), by using virtualization technologies. Management of the resource nodes is separated from management of the service instances. For example, a virtual machine serving as a resource node is managed by the infrastructure as a service (infrastructure as a service, IaaS) layer, and a container serving as a service instance is managed by the Kubernetes (k8s) control plane.

Because management of the resource node is separated from management of the service instance, management of the service instance cannot perceive operations on the resource node. As a result, service instances in a resource node passively adapt to operations on the resource node. For example, when a migration operation is performed on a resource node, service instances in the resource node are passively migrated along with the migration of the resource node. This may affect the quality of service (quality of service, QoS) of the service instances, causing the QoS of the service instances to fall below the corresponding QoS requirements.

### SUMMARY

This application provides a cloud technology-based service instance management method, a cloud management platform, and a cluster, to prevent the QoS of a service instance from being affected by an operation on a resource node in which the service instance is located.

According to a first aspect, a cloud technology-based service instance management method is provided. The method is applied to a cloud management platform connected to cloud infrastructure, the cloud management platform is configured to manage a plurality of service instances deployed in the cloud infrastructure, the cloud infrastructure includes a plurality of physical machines, each of the plurality of physical machines is configured to deploy one or more resource nodes, each of the plurality of service instances is deployed in at least one resource node in the cloud infrastructure, and quality of service QoS of a service instance is affected by a status of a resource node in which the service instance is located. The method includes: The cloud management platform receives event information sent by a first physical machine among the plurality of physical machines, where the event information includes an expected execution time of an operation, and the operation affects a status of a first resource node in the first physical machine; and the cloud management platform migrates, based on a QoS requirement for a service instance in the first resource node before the expected execution time, the service instance from the first resource node to a second resource node in a second physical machine among the plurality of physical machines. The second physical machine is a healthy physical machine, and the healthy physical machine is a physical machine that is not faulty and is not changed.

When the physical machine is to perform the operation that affects the resource node in the physical machine, the physical machine may send the event information. The event information includes an expected execution time of the operation. The cloud management platform may receive the event information, and obtain the expected execution time of the operation from the event information. The cloud management platform may migrate, based on the QoS requirement for the service instance in the resource node, the service instance to a resource node in another physical machine. In this way, execution of the operation does not affect the QoS of the service instance, that is, the QoS of the service instance can be prevented from being affected by the operation on the resource node in which the service instance is located.

In a possible implementation, the event information further includes a type of the operation; and that the cloud management platform migrates, based on the QoS requirement for the service instance in the first resource node, the service instance from the first resource node to the second resource node in the second physical machine among the plurality of physical machines includes: The cloud management platform determines, based on the type of the operation, that the operation is to cause the QoS of the service instance in the first resource node to fall below the QoS requirement; and the cloud management platform migrates the service instance from the first resource node to the second resource node.

When it is determined that the operation performed on the resource node is to cause the QoS of the service instance to fall below the QoS requirement, the service instance is migrated to the resource node in the another physical machine. In this way, when the operation is performed, it can be ensured that the QoS of the service instance is not lower than the QoS requirement, thereby improving service experience of a user.

In a possible implementation, that the cloud management platform migrates, based on the QoS requirement for the service instance in the first resource node, the service instance from the first resource node to the second resource node in the second physical machine among the plurality of physical machines includes: The cloud management platform determines that the QoS requirement is greater than or equal to a preset QoS threshold; and the cloud management platform migrates the service instance from the first resource node to the second resource node.

The QoS threshold is a threshold for determining whether the service instance can tolerate an operation that affects the resource node. If the QoS requirement for the service instance is greater than or equal to the QoS threshold, it indicates that the QoS requirement for the service instance A1 cannot tolerate any operation that affects the resource node. In this case, the operation that affects the resource node causes, by default, the QoS of the service instance not to fall below the QoS requirement. Therefore, there is no need to determine whether the operation that affects the resource node is to cause the QoS of the service instance not to fall below the QoS requirement, and the service instance is directly migrated to the resource node in the another physical machine. In this way, the QoS of the service instance is ensured to be not lower than the QoS requirement, service experience of the user is improved, and compute resources of the cloud management platform can be further saved.

In a possible implementation, the method further includes: The cloud management platform prohibits deployment of a new service instance in the first resource node.

The cloud management platform may determine, based on the event information, to perform an operation that affects the first resource node on the first resource node. In this case, the cloud management platform no longer deploys the new service instance in the first resource node, so that the operation that affects the first resource node cannot affect QoS of the newly deployed service instance.

In a possible implementation, the operation is used to address a hardware fault or change, where the hardware is used by the first physical machine to run the first resource node; or the operation is used to address a software fault or change, where the software includes at least one of an operating system of the first physical machine and management software of the first resource node.

That is, the fault or change of software or hardware related to the resource node in the physical machine triggers the physical machine to perform, on the resource node, the operation to address the fault or change, and send the event information. The cloud management platform may migrate, based on the event information, the service in the resource node to the resource node in the another physical machine before the operation is performed, so that the operation performed on the resource node cannot affect the QoS of the service instance.

In a possible implementation, the service instance in the first resource node includes any one or more of a container, a database instance, and a data warehouse instance.

In a possible implementation, the first resource node is a virtual machine or a bare metal server, or the first resource node is the first physical machine.

According to a second aspect, a cloud management platform is provided. The cloud management platform is connected to cloud infrastructure, the cloud management platform is configured to manage a plurality of service instances deployed in the cloud infrastructure, the cloud infrastructure includes a plurality of physical machines, each of the plurality of physical machines is configured to deploy one or more resource nodes, each of the plurality of service instances is deployed in at least one resource node in the cloud infrastructure, and quality of service QoS of a service instance is affected by a status of a resource node in which the service instance is located. The cloud management platform includes: a receiving module, configured to receive event information sent by a first physical machine among the plurality of physical machines, where the event information includes an expected execution time of an operation, and the operation affects a status of a first resource node in the first physical machine; and a migration module, configured to migrate, based on a QoS requirement for a service instance in the first resource node before the expected execution time, the service instance from the first resource node to a second resource node in a second physical machine among the plurality of physical machines.

In a possible implementation, the event information further includes a type of the operation; and the migration module is configured to: determine, based on the type of the operation, that the operation is to cause the QoS of the service instance in the first resource node to fall below the QoS requirement; and migrate the service instance from the first resource node to the second resource node.

In a possible implementation, the migration module is configured to: determine that the QoS requirement is greater than or equal to a preset QoS threshold; and migrate the service instance from the first resource node to the second resource node.

In a possible implementation, the cloud management platform further includes a prohibition module, configured to prohibit deployment of a new service instance in the first resource node.

In a possible implementation, the operation is used to address a hardware fault or change, where the hardware is used by the first physical machine to run the first resource node; or the operation is used to address a software fault or change, where the software includes at least one of an operating system of the first physical machine and management software of the first resource node.

In a possible implementation, the service instance in the first resource node includes any one or more of a container, a database instance, and a data warehouse instance.

In a possible implementation, the first resource node is a virtual machine or a bare metal server, or the first resource node is the first physical machine.

According to a third aspect, a compute device cluster is provided, and includes at least one compute device. Each compute device includes a processor and a memory, and a processor in the at least one compute device is configured to execute instructions stored in a memory in the at least one compute device, to enable the compute device cluster to perform the method according to the first aspect.

According to a fourth aspect, a computer-readable storage medium is provided, and includes computer program instructions. When the computer program instructions are executed by a compute device cluster, the compute device cluster performs the method according to the first aspect.

According to a fifth aspect, a computer program product including instructions is provided. When the instructions are run by a compute device cluster, the computer device cluster is enabled to perform the method according to the first aspect.

For beneficial effect of the second aspect to the fifth aspect, refer to the foregoing descriptions of the beneficial effect of the first aspect. Details are not described herein again.

### BRIEF DESCRIPTION OF DRAWINGS

FIG. 1 is a diagram of a system architecture according to an embodiment of this application;
FIG. 2 is a diagram of a structure of an anomaly detection instance according to an embodiment of this application;
FIG. 3 is a diagram of a structure of an event generation instance according to an embodiment of this application;
FIG. 4 is a diagram of a function of an event detection channel according to an embodiment of this application;
FIG. 5 is a diagram of a structure of an event detection instance according to an embodiment of this application;
FIG. 6 is a flowchart of a service instance management method according to an embodiment of this application;
FIG. 7 is a diagram of a service instance management method according to an embodiment of this application;
FIG. 8 is a diagram of a service instance management method according to an embodiment of this application;
FIG. 9 is a diagram of a structure of a cloud management platform according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram of a structure in which compute device clusters are connected through a network according to an embodiment of this application.

### DESCRIPTION OF EMBODIMENTS

The following describes solutions in embodiments of this application with reference to the accompanying drawings. In embodiments of this application, "a plurality of" means two or more, and "a plurality of types" means two or more types. Terms "first", "second", and the like are merely intended to distinguish between similar objects, and do not need to be used to describe a specific sequence or a quantity of objects.

To facilitate understanding of the solutions provided in embodiments of this application, technical terms that may be used in embodiments of this application are first described.

Cloud technology (cloud technology): The cloud technology is a hosting service that integrates a series of resources such as hardware, software, and a network in a wide area network or a local area network to implement data computing, storage, processing, and sharing.

Cloud infrastructure: also referred to as infrastructure, is a facility that supports cloud computing services, and includes at least one data center. Each data center includes a plurality of physical machines (for example, servers). The physical machine may be used as a resource node or a resource node may be deployed in the physical machine. Service instances such as a container, a database instance, and a data warehouse service instance may be run on the resource node to implement an elastic cloud computing service. For example, when the cloud infrastructure includes a plurality of data centers, the plurality of data centers may be distributed in different geographical areas, and the data centers are remotely connected to each other through a backbone network.

Resource node: a node that has resources such as a compute resource and a storage resource and can be used to deploy service instances. The resource node may be a physical machine, for example, a server. The resource node may alternatively be a virtual machine or a bare metal server (bare metal server, BMS) deployed on a physical machine.

Service instance: a set of programs or processes used to provide services such as data storage service and data computing. Common service instances include a database instance, a data warehouse service instance, and a container. One service instance may be deployed in at least one resource node.

Cloud management platform: a platform provided by a cloud service provider to manage a service instance, for example, creating, stopping, and migrating the service instance. The cloud service provider may provide a cloud service to a user in the form of a service instance. The cloud management platform may interact with a user. The user may register an account on the cloud management platform and rent, by using the account, a cloud service provided by one or more service instances, to become a tenant of the cloud service.

Quality of service (quality of service, QoS): means quality of a service provided by a service instance. The QoS may be represented by indicators such as latency and throughput. The QoS is negatively correlated with the latency, and the QoS is positively correlated with the throughput. The QoS reflects a capability of the service instance to provide a service.

QoS requirement: a QoS requirement of a cloud vendor or a tenant for a service instance. For example, QoS of the service instance includes a latency, and a requirement for the QoS of the service instance specifies that the latency cannot be greater than a preset latency threshold. For another example, QoS of the service instance includes a throughput, and a requirement for the QoS of the service instance specifies that the throughput of the service instance cannot be less than a preset throughput threshold. The QoS requirement for the service instance may be set by a cloud vendor or a tenant to which the service instance belongs.

Planned event: also referred to as a planned O&M event or operation, is an event proactively sent to improve reliability and security of a resource node. Generally, a risk of a software or hardware fault in a physical machine is proactively predicted, and a planned event is generated based on a prediction result. The planned event is usually to migrate a resource node from the physical machine, to avoid impact of the software or hardware fault on the resource node.

Unplanned event: also referred to as a planned running event or an O&M operation, is an event triggered by a software or hardware fault in a physical machine. Compared with the planned event, the unplanned event is passively generated to address the software or hardware fault that has occurred in the physical machine. The unplanned event is also usually to migrate a resource node from the physical machine, to avoid impact of the software or hardware fault on the resource node.

Live migration (live migration): also referred to as dynamic migration or real-time migration, means that a running status of an entire resource node in a physical machine is completely saved, and the running status of the resource node is quickly restored to another physical machine. The restored resource node still runs smoothly. During live migration, frequencies of a central processing unit (central processing unit, CPU), a memory, and the like of the resource node need to be reduced, to increase a time interval for the CPU and the memory to execute instructions or process data. Then, the live migration is completed within the time interval.

Cold migration: also referred to as static migration, means a process of powering off a resource node and migrating the resource node from a current physical machine to another physical machine when the resource node is powered off. Cold migration requires the resource node to be powered off, which takes a long time. Compared with live migration, cold migration has greater impact on a service of the resource node.

In the cloud technology, a cloud service is provided through a service instance, and the service instance is deployed in a resource node. Therefore, QoS of the service instance is affected by a status of the resource node. The status of the resource node may be specifically a running status of the resource node. When the status of the resource node deteriorates, the QoS of the service instance decreases. An operation on the resource node usually affect the status of the resource node. For example, to address a software or hardware fault in a physical machine, an upgrade of an operating system of the physical machine, a degraded status of a hardware resource in the physical machine, and the like, a live migration operation or a cold migration operation of the resource node is usually triggered. The live migration operation of the resource node causes reductions on the frequencies of the CPU and the memory, and the like of the resource node, and consequently, the resource node is in a state in which the CPU runs at a low frequency and the memory runs at a low frequency. This affects the QoS of the service instance. If a QoS requirement for the service instance is high, the QoS of the service instance is lower than the QoS requirement due to reductions on the frequencies of the CPU and the memory, and the like of the resource node. In addition, cold migration requires the resource node to be powered off, which has greater impact on the QoS of the service instance.

The cloud management platform configured to manage the service instance is separated from an underlying management platform configured to manage the resource node. As a result, the cloud management platform cannot predict the operation (for example, the planned event or the unplanned event) on the resource node. Therefore, the cloud management platform usually reschedules the service instance, for example, migrates the service instance to another resource node, only when the operation on the resource node has started to be performed and the status of the resource node has affected the QoS of the service instance. This affects reliability and resilience of the cloud service, and even affects user experience of the cloud service.

Embodiments of this application provide a cloud technology-based service instance management method. In the method, before an operation is performed on a resource node in a physical machine, the physical machine may send event information. The event information includes an expected execution time of the operation, and the operation affects the resource node in the physical machine. A cloud management platform may receive the event information, and obtain the expected execution time of the operation from the event information. Then, the cloud management platform may migrate, before the expected execution time of the operation, a service instance to a resource node in another physical machine based on a QoS requirement for the service instance in the resource node.

In the method, the cloud management platform may obtain, by using the event information, the expected execution time of the operation that affects the resource node in the physical machine, and the cloud management platform migrates the service instance in the resource node to the resource node in the another physical machine before the expected execution time. In this way, quality of service of the service instance in the resource node can be prevented from being affected by the operation of the resource node.

The following specifically describes the service instance management method provided in embodiments of this application.

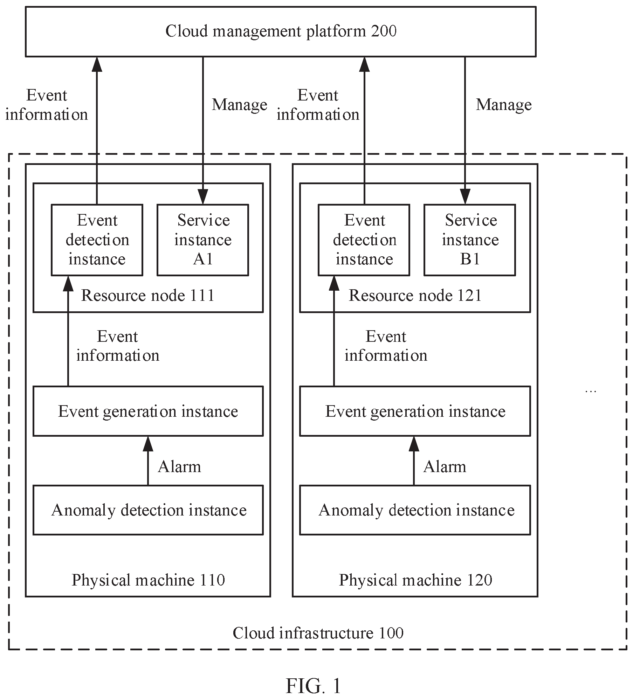

FIG. 1 shows a system architecture that may be used to implement the method. As shown in FIG. 1, the system architecture includes cloud infrastructure 100 and a cloud management platform 200. The cloud infrastructure 100 includes a plurality of physical machines, such as a physical machine 110 and a physical machine 120. For example, the physical machine may be specifically a server.

In some embodiments, the cloud infrastructure 100 may include a plurality of data centers, where each data center may include at least one of the plurality of physical machines. In other words, different physical machines in the plurality of physical machines may be respectively deployed in different data centers. For example, the physical machine 110 and the physical machine 120 are separately deployed in different data centers.

One or more resource nodes may be deployed in each physical machine. For example, a resource node 111 is deployed in the physical machine 110, and a node 121 is deployed in the physical machine 120. In some embodiments, a resource node deployed in a physical machine is the physical machine. In some embodiments, a resource node deployed in a physical machine may be a virtual machine, a bare metal server, or the like. The cloud management platform 200 may create one or more service instances in the resource nodes in the cloud infrastructure 100, for example, create a service instance A1 in the resource node 111, and create a service instance B1 in the resource node 112. One service instance may be deployed in at least one resource node, and QoS of a service instance is affected by a status of the resource node in which the service instance is located. The cloud management platform 200 may manage the service instance in the resource node, for example, migrate the service instance from the current resource node to another resource node.

Refer to FIG. 1. Each physical machine includes an anomaly detection instance and an event generation instance. The anomaly detection instance is configured to: detect an anomaly or a change of the physical machine, and send an alarm. The event generation instance is configured to: generate an event based on the alarm, and send event information to the cloud management platform 200. The anomaly detection instance and the event generation instance directly run in the physical machine, for example, directly run in an operating system of the physical machine in the form of a system service or an application.

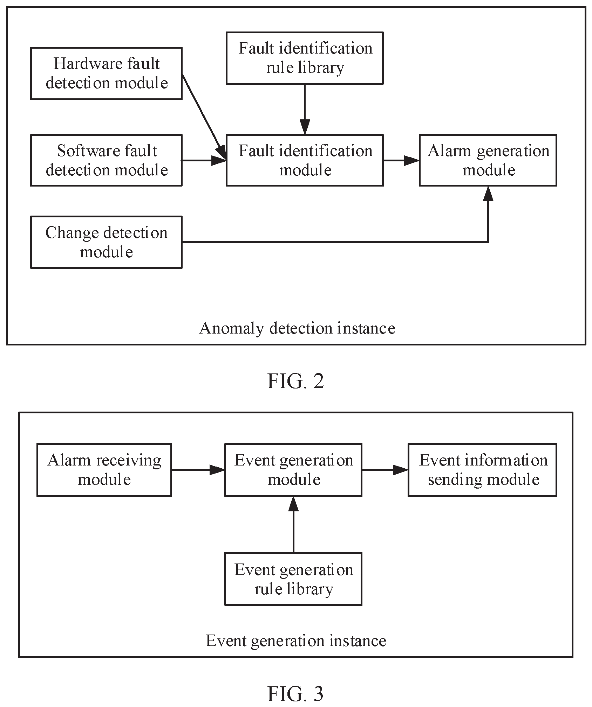

The anomaly of the physical machine may include a hardware fault of the physical machine. Refer to FIG. 2. The anomaly detection instance may include a hardware fault detection module. The hardware fault detection module is configured to detect a status of hardware of the physical machine. The hardware may include one or more of a processor, a southbridge chip (platform controller hub, PCH), a data card, a redundant array of independent disks (redundant array of independent disks, RAID) card, a fan, a memory, a disk, a network interface card, a mainboard, a power supply, and the like. The processor may be a CPU, a graphics processing unit (graphics processing unit, GPU), or the like. The data card may be a peripheral component interconnect express (peripheral component interconnect express, PCIE) card or the like.

In some embodiments, the hardware fault detection module may detect a hardware running indicator, for example, a temperature of the CPU, a frequency of the CPU, and an accumulated quantity of dirty memory pages. In some embodiments, the hardware fault detection module may detect a kernel event of the operating system of the physical machine, for example, a CPU internal error (CPU IERR) event, a system-level memory initialization error event, and a hard disk drive fault event generated in a kernel log. The hardware fault detection module may periodically detect the hardware running indicator or the kernel event, for example, detect the hardware running indicator or the kernel event once at an interval of five seconds.

As shown in FIG. 2, the anomaly detection instance includes a fault identification module. The fault identification module may obtain the hardware running indicator and/or the kernel event detected by the hardware fault detection module, and identify, based on the hardware running indicator and/or the kernel event, whether a fault occurs in the hardware.

As shown in FIG. 2, the anomaly detection instance has a fault identification rule library. The fault identification rule library includes a fault identification rule. The fault identification rule may be preset. According to the fault identification rule, it may be identified, based on the hardware running indicator and/or the kernel event detected by the faulty hardware fault detection module, that the fault occurs in the hardware. In an example, the fault identification rule is shown in Table 1.

**Table 1**

| Hardware running indicator and/or kernel event | Fault type |
|---|---|
| A temperature of a CPU is greater than a preset temperature threshold | Fan fault |
| A frequency of the CPU is greater than a preset frequency threshold | CPU fault |
| CPU internal error | CPU fault |
| System-level memory initialization error event | Memory configuration error |
| Hard disk drive fault event | Low remaining disk service life |
| An accumulated quantity of dirty memory pages greater than a preset threshold | A memory is in a degraded state |
| ... | ... |

As shown in FIG. 2, the anomaly detection instance further includes an alarm generation module. The alarm generation module is configured to generate an alarm based on the hardware fault identified by the fault identification module. When the hardware fault occurs in the hardware, and the faulty hardware is hardware required by the physical machine to run the resource node, the fault identification module may trigger the alarm generation module to generate the alarm. In an example, the alarm generation module may generate the alarm based on an alarm format shown in Table 2.

**Table 2**

| Alarm component | Alarm identifier | Alarm name (fault type) |
|---|---|---|
| CPU | 0x00000001 | CPU fault |
| Fan | 0x00000002 | Fan fault |
| Memory | 0x00000003 | Memory configuration error |
| Hard disk | 0x00000004 | Low remaining disk service life |
| ... | ... | ... |

With reference to the alarm format shown in Table 2, the alarm generation module may generate the alarm based on the hardware fault. The alarm corresponds to the fault type, and different alarms are generated for different fault types.

In some embodiments, as shown in FIG. 2, the anomaly detection instance includes a software fault detection module. The software fault detection module is configured to detect a running status of software, for example, a response time of the software, a frequency of software crashes or hangs, or thread leakage. The software is an operating system of the physical machine or management software of the resource node. For example, when the resource node is a virtual machine, the software may be a virtual machine monitor (virtual machine monitor, VMM). The fault identification module may identify, based on the running status of the software detected by the software fault detection module, whether a fault occurs in the software. For example, when the response time of the software is greater than a preset time threshold, it may be determined that the fault occurs in the software. In addition, the fault may also include a degraded state. If thread leakage occurs in the software, it indicates that the software is in the degraded state. When determining that the fault occurs in the software, the fault identification module may trigger the alarm generation module to generate an alarm.

In some embodiments, as shown in FIG. 2, the anomaly detection instance includes a change detection module. A change may be a planned O&M operation, for example, replacing one or more pieces of hardware in the physical machine, upgrading software like the operating system of the physical machine, or installing a patch. O&M personnel may input change time and a change type by using the change detection module. The alarm generation module may generate an alarm based on the change time and the change type.

The event generation instance may generate an event based on the alarm. As shown in FIG. 3, the event generation instance may include an alarm receiving module, an event generation module, and an event information sending module. The alarm receiving module may receive the alarm from the anomaly detection instance, and send the received alarm to the event generation module. The event generation module may generate the event based on the alarm. An event refers to performing an operation on the resource node at expected execution time. In other words, the event includes the operation and the expected execution time of the operation. There may be a plurality of types of operations. Common operation types include migration of the resource node and restart of the physical machine. The migration of the resource node may be classified into live migration and cold migration. Compared with cold migration, live migration of the resource node takes shorter time and has little impact on the QoS of the service instance in the resource node.

The event generation module may generate different events based on different alarms. Different events may mean different types of operations in the events. For example, if the alarm is an alarm corresponding to a CPU fault, a type of an operation in the generated event is cold migration of the resource node. For another example, if the alarm is an alarm corresponding to a memory configuration error, a type of an operation in the generated event is restart of the physical machine, or the like. In some embodiments, the event generation instance has an event generation rule library. The event generation rule library includes a preset correspondence between an alarm and an event. The event generation module may generate a corresponding event based on the correspondence and the alarm.

The operation in the event is an operation to address a fault or change corresponding to the alarm. That is, the operation in the event is an operation to be performed by the physical machine to address a hardware fault, a software fault, or a software and hardware change. For example, a fault occurs in hardware in the physical machine, and the fault affects running of the resource node. To ensure running of the resource node, a migration operation is performed on the resource node. Another example is not described.

The event may be represented by event information. The event information includes an expected execution time of an operation, a type of the operation, and the like. In some embodiments, the event information may further include an event identifier (identifier, ID), an event description, an execution status of the operation, and the like. The execution status of the operation may include to be executed, being executed, executed, canceled, and the like.

In an example, a format of the event information may be shown in Table 3.

**Table 3**

| Field | Meaning |
|---|---|
| ID | Event ID |
| Type | Type of an operation in an event |
| Description | Event description |
| NotBefore | Operation start time |
| NotAfter | Operation end time |
| State | Execution status of the operation |

Each time the event generation module generates an event, event information of the event may be sent to the event information sending module. The event information sending module may send the event information.

The cloud management platform 200 may receive the event information, and schedule the service instance in the resource node in the physical machine based on the event information. Refer to FIG. 1. An event detection instance is deployed in the resource node in the physical machine. The event detection instance is a service instance, and is specifically a service instance used to detect the event information. The event detection instance in the physical machine may obtain the event information sent by the event generation instance in the physical machine. The event detection instance may send the obtained event information to the cloud management platform 200.

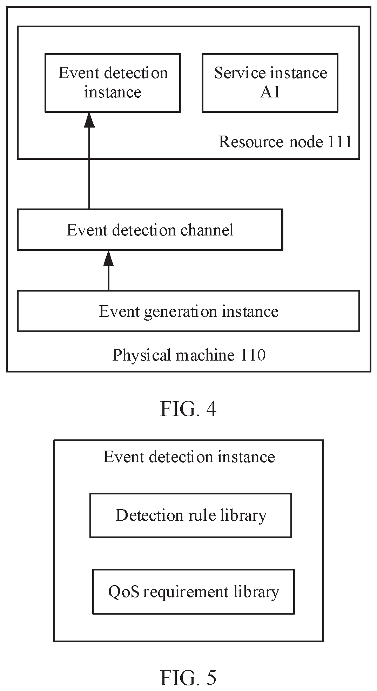

In some embodiments, in the field of cloud computing, for security purposes, a virtual network environment in which the service instance is located is isolated from a physical network environment in which the physical machine is located, and the service instance and the physical machine cannot directly access each other. In other words, the event detection instance cannot obtain the event information by directly accessing the physical machine. Refer to FIG. 4. This embodiment provides an event detection channel. The event detection instance may obtain the event information through the event detection channel.

The event detection channel may be an interface, and the event detection instance may obtain the event information through the interface. Specifically, the interface is associated with a piece of storage space of the physical machine. The storage space is used to store the event information generated by the physical machine. That is, the event generation instance may store the event information in the storage space. The physical machine may open the interface to or provide the interface for the event detection instance in the resource node in the physical machine. The event detection instance may access, through the interface, the storage space associated with the interface, to read the event information from the storage space. The event detection instance may periodically access the storage space through the interface, to detect whether new event information is generated. For example, the event detection instance may access the storage space through the interface at an interval of 1 second. Only the storage space associated with the interface can be accessed through the interface, and other storage space cannot be accessed. In this way, information security of the physical machine is ensured.

In some embodiments, as shown in FIG. 5, a detection rule library is preset for the event detection instance. The detection rule library includes a preset correspondence between an event detection instance and an event detection channel. The event detection instance may obtain, based on the correspondence, the event detection channel corresponding to the event detection instance, to obtain event information through the event detection channel.

In some embodiments, the event detection instance may select the obtained event information. Specifically, an operation corresponding to some event information may have been canceled or completed. In this case, there is no need to send the event information to the cloud management platform 200. The event detection instance may select, from the obtained event information, event information corresponding to a to-be-executed operation, and send the selected event information to the cloud management platform. As described above, the event information includes an execution status of the operation, and the event detection instance selects the event information based on the execution status of the operation in the event information.

In some embodiments, as shown in FIG. 5, a QoS requirement library is preset for the event detection instance. The QoS requirement library includes a QoS requirement for the service instance in the resource node in which the event detection instance is located. The event detection instance may further send the QoS requirement for the service instance to the cloud management platform 200 based on the QoS requirement library. For example, when sending the event information to the cloud management platform 200, the event detection instance sends the QoS requirement for the service instance to the cloud management platform 200, so that the cloud management platform schedules the service instance based on the event information and the QoS requirement for the service instance.

The foregoing examples describe the system architecture provided in embodiments of this application. The following describes, with reference to the system architecture, the service instance management method provided in embodiments of this application.

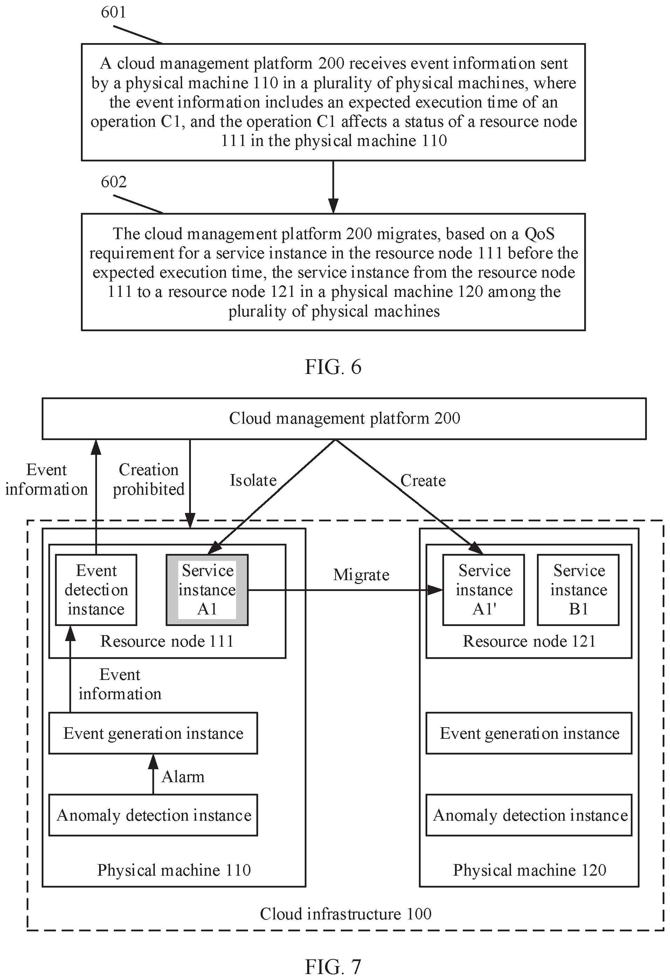

The method is performed by a cloud management platform 200. As shown in FIG. 6, the method includes the following steps.

Step 601: The cloud management platform 200 receives event information sent by a physical machine 110 in a plurality of physical machines, where the event information includes an expected execution time of an operation C1, and the operation C1 affects a status of a resource node 111 in the physical machine 110.

The cloud management platform 200 may receive the event information from the physical machine 110, for example, receive the event information from an event detection instance in the resource node 111 in the physical machine 110. For details, refer to the foregoing descriptions. Details are not described herein again.

The expected execution time is later than current time, and the expected execution time is later than execution time of step 601.

The operation C1 is an operation to be performed by the physical machine 110 at the expected execution time, and the operation C1 affects the status of the resource node 111. The status of the resource node may be a running status of the resource node. That is, when the physical machine 110 performs the operation C1, the status of the resource node 111 changes. Specifically, the status of the resource node 111 deteriorates. As described above, deterioration of the status of the resource node causes a decrease in QoS of the service instance in the resource node. That is, execution of the operation C1 causes the decrease in the QoS of the service instance in the resource node 111.

In some embodiments, the operation C1 is an operation used to address a hardware fault or change in the physical machine 110, where the hardware is hardware required by the physical machine 110 to run the resource node 111. That is, the hardware provides a hardware resource for the physical machine 1110 to run the resource node 111. In some embodiments, the operation C1 is an operation used to address a hardware fault or change, where the software is an operating system of the physical machine 111 or management software of the resource node. For a generation manner and a function of the operation C1, refer to the foregoing descriptions in the embodiments shown in FIG. 2 and FIG. 3. Details are not described herein again.

Step 602: The cloud management platform 200 migrates, before the expected execution time, a service instance in the resource node 111 to a resource node 121 in a physical machine 120 in the plurality of physical machines based on a QoS requirement for the service instance in the resource node 111. The physical machine 120 is a healthy physical machine, and the cloud management platform 200 receives no event information sent by the physical machine 120.

The service instance has the QoS requirement. The QoS requirement for the service instance may be set by a cloud vendor or a tenant to which the service instance belongs.

In some embodiments, the cloud management platform 200 stores QoS requirements for service instances. The cloud management platform 200 may perform step 602 based on the QoS requirement that is for the service instance in the resource node 111 and that is stored by the cloud management platform 200.

In some embodiments, the cloud management platform 200 may receive, from the resource node 111, the QoS requirement for the service instance in the resource node 111. For example, as described above, the event detection instance in the resource node 111 may send the QoS requirement for the service instance in the resource node 111 to the cloud management platform 200.

In some embodiments, when the resource node is a virtual machine or a bare metal server, operation types for the resource node may include live migration of the resource node, cold migration of the resource node, and restart of the physical machine. That is, the operation C1 is one of live migration of the resource node, cold migration of the resource node, and restart of the physical machine. Live migration of the resource node, cold migration of the resource node, and restart of the physical machine all cause deterioration of the status of the resource node, that is, live migration of the resource node, cold migration of the resource node, and restart of the physical machine all reduce the QoS of the service instance in the resource node. The decrease in the QoS of the service instance caused by live migration of the resource node, cold migration of the resource node, and restart of the physical machine increases progressively.

There may be a plurality of QoS levels for the QoS requirement for the service instance, and different QoS levels tolerate different operation types. The plurality of QoS levels may be set to include a QoS level D1, a QoS level D2, a QoS level D3, and a QoS level D4 whose QoS decreases progressively. A QoS requirement for a service instance that provides a game backend compute service is usually the QoS level D1, a QoS requirement for a service instance that provides an e-commerce service is usually the QoS level D2, a QoS requirement for a service instance that provides an offline AI model training service is usually the QoS level D3, and a QoS requirement for a service instance that provides a periodic dialing test service is usually the QoS level D4.

As shown in Table 4, the QoS level D1 cannot tolerate an operation of any operation type, that is, the QoS level D1 cannot tolerate live migration of the resource node. The QoS level that cannot tolerate live migration of the resource node also cannot tolerate cold migration of the resource node and restart of the physical machine. That is, live migration of the resource node causes the QoS of the service instance in the resource node to fall below the QoS level D1.

The QoS level D2 can tolerate live migration of the resource node, but cannot tolerate cold migration of the resource node or restart of the physical machine. That is, the QoS of the service instance affected by live migration of the resource node is not lower than the QoS level D2, but the QoS of the service instance is lower than the QoS level D2 due to cold migration of the resource node or restart of the physical machine.

The QoS level D3 can tolerate cold migration of the resource node, but cannot tolerate restart of the physical machine. A QoS level that tolerates cold migration of the resource node also cannot tolerate live migration of the resource node. That is, the QoS of the service instance affected by cold migration or live migration of the resource node is not lower than the QoS level D3, but the QoS of the service instance is lower than the QoS level D3 due to restart of the physical machine.

The QoS level D4 can tolerate an operation of any operation type. That is, regardless of a type of an operation performed on the resource node, the QoS of the service instance in the resource node is higher than the QoS level D4.

**Table 4**

| Service instance | QoS requirement | Tolerable operation type |
|---|---|---|
| Service instance A1 | QoS level D1 | An operation of any operation type cannot be tolerated |
| Service instance A2 | QoS level D2 | Live migration of a resource node |
| Service instance A3 | QoS level D3 | Cold migration of the resource node |
| | QoS level D4 | An operation of any operation type can be tolerated |

In some embodiments, in step 602, the cloud management platform 200 determines whether a QoS requirement for the service instance A1 in the resource node 111 is greater than or equal to a preset QoS threshold. The preset QoS threshold may be the QoS level D1. If the QoS requirement for the service instance A1 is greater than or equal to the preset QoS threshold, in step 602, the cloud management platform 200 migrates the service instance A1 to the resource node 121. That is, in step 602, when determining that the QoS requirement for the service instance A1 in the resource node 111 is greater than or equal to the preset QoS threshold, the cloud management platform 200 migrates the service instance A1 to the resource node 121.

Specifically, if the QoS requirement for the service instance A1 is greater than or equal to the preset QoS threshold, it indicates that the QoS requirement for the service instance A1 cannot tolerate an operation of any type. In this case, regardless of a type of operation C1, the QoS requirement for the service instance A1 cannot tolerate the operation, that is, the operation C1 causes, by default, the QoS of the service instance A1 to fall below the QoS requirement for the service instance A1. Therefore, there is no need to identify the type of the operation C1, and the service instance is directly migrated.

The service instance may be migrated in the following manner.

Refer to FIG. 7. First, a service instance A1' is created in the resource node 121. The service instance A1' is a copy of the service instance A1, and may provide a service provided by the service instance A1. When the service instance A1' is successfully created, that is, when the service instance A1' can provide the service provided by the service instance A1, the service instance A1' is started, and the service instance A1 is isolated. A new service request is sent to the service instance A1', and no new service request is sent to the service instance A1. The service instance A1 still keeps running to process an inventory service request (that is, a service request sent to the service instance A1 before the service instance A1' is started). For example, when the service instance A1 completes processing of the inventory service request, the cloud management platform 200 may delete the service instance A1 from the resource node 111.

In the foregoing service instance migration manner, lossless migration of the service instance is implemented, so that QoS of the service provided by the service instance A1 is not lower than the QoS level D1.

When the expected execution time of the operation C1 arrives, the physical machine 110 performs the operation C1 on the resource node 111. In this case, the service instance A1 has been migrated out of the resource node 111, and the operation C1 performed on the resource node 111 does not affect the service instance A1. In other words, a service instance that provides the service provided by the service instance A1 has been migrated out of the resource node 111, and the operation C1 performed on the resource node 111 does not affect QoS of the service.

In some embodiments, the event information received by the cloud management platform 200 further includes a type of the operation C1. In step 602, it may be determined, based on the type of the operation C1, whether the operation C1 causes the QoS of the service instance in the resource node 111 to fall below the QoS requirement for the service instance. It may be determined whether the QoS requirement for the service instance can tolerate the type of the operation C1. If the QoS requirement for the service instance cannot tolerate the type of the operation C1, it is determined that the operation C1 is to cause the QoS of the service instance in the resource node 111 to fall below the QoS requirement for the service instance. If the QoS requirement for the service instance can tolerate the type of the operation C1, it is determined that the operation C1 does not cause the QoS of the service instance in the resource node 111 to fall below the QoS requirement for the service instance.

For example, as shown in Table 4, the service instance A2 may be further set to be deployed in the resource node 111, where a QoS requirement for the service instance A2 is the QoS level D2. As described above, the QoS level D2 can tolerate only live migration of the resource node. If the operation C1 is cold migration of the resource node or restart of the physical machine, it is determined that the operation C1 causes the QoS of the service instance A2 to fall below the QoS requirement for the service instance A2. If the operation C1 is live migration of the resource node, it is determined that the operation C1 does not cause the QoS of the service instance A2 to fall below the QoS requirement for the service instance A2.

The service instance A3 may be further set to be deployed in the resource node 111, where a QoS requirement for the service instance A3 is the QoS level D3. As described above, the QoS level D3 can tolerate cold migration of the resource node and live migration of the resource node. If the operation C1 is restart of the physical machine, it is determined that the operation C1 causes the QoS of the service instance A3 to fall below the QoS requirement for the service instance A3. If the operation C1 is live migration or cold migration of the resource node, it is determined that the operation C1 does not cause the QoS of the service instance A3 to fall below the QoS requirement for the service instance A3.

In step 602, when it is determined that the operation C1 is to cause the QoS of the service instance in the resource node 111 to fall below the QoS requirement for the service instance, the cloud management platform 200 migrates the service instance in the resource node 111 to the resource node 121.

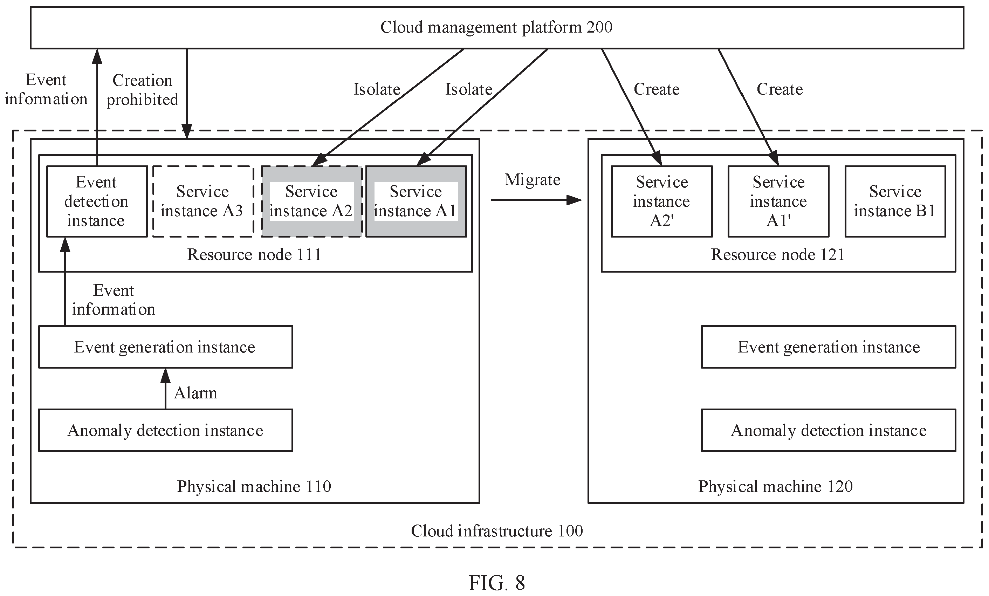

For example, as shown in FIG. 8, the operation C1 is to cause the QoS of the service instance A2 in the resource node 111 to fall below the QoS requirement for the service instance A2, and the cloud management platform 200 migrates the service instance A2 from the resource node 111 to the resource node 121. A service instance A2' is created in the resource node 121. The service instance A2' is a copy of the service instance A2, and may replace the service instance A2 in the resource node 111 to provide a corresponding service. For details, refer to the foregoing descriptions. Details are not described herein again.

In step 602, when it is determined that C1 does not cause the QoS of the service instance in the resource node 111 to fall below the QoS requirement for the service instance, the cloud management platform 200 may not migrate the service instance. When the operation C1 is performed on the resource node 111, the service instance is scheduled in a conventional manner.

For example, as shown in FIG. 8, the operation C1 does not cause the QoS of the service instance A3 in the resource node 111 to fall below the QoS requirement for the service instance A3. In this case, the cloud management platform may not migrate the service instance A3 out of the resource node 111.

In some embodiments, when the cloud management platform 200 receives the event information, the cloud management platform 200 prohibits deployment of a new service instance in a resource node (namely, the resource node 111) corresponding to the event information. In this way, the new service instance can be prevented from being affected by the operation C1, and scheduling pressure of the cloud management platform 200 is reduced.

In conclusion, when the physical machine is to perform the operation that affects the resource node in the physical machine, the physical machine may send the event information to the cloud management platform. The event information includes an expected execution time of the operation. When receiving the event information, the cloud management platform may obtain the expected execution time, and migrate the service instance in the resource node to a resource node in another physical machine before the expected execution event. In this way, the QoS of the service instance in the resource node can be prevented from being affected by the operation.

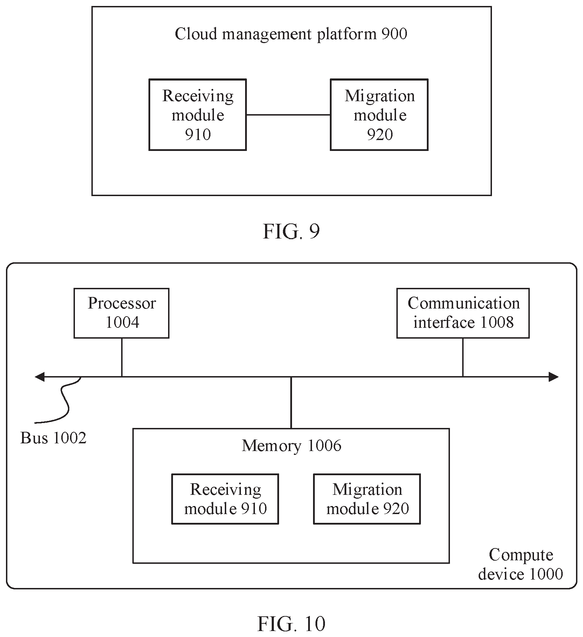

Refer to FIG. 9. An embodiment of this application provides a cloud management platform 900. The cloud management platform 900 is connected to cloud infrastructure, the cloud management platform is configured to manage a plurality of service instances deployed in the cloud infrastructure, the cloud infrastructure includes a plurality of physical machines, each of the plurality of physical machines is configured to deploy one or more resource nodes, each of the plurality of service instances is deployed in at least one resource node in the cloud infrastructure, and QoS of a service instance is affected by a status of a resource node in which the service instance is located. As shown in FIG. 9, the cloud management platform 900 includes:
a receiving module 910, configured to receive event information sent by a first physical machine among the plurality of physical machines, where the event information includes an expected execution time of an operation, and the operation affects a status of a first resource node in the first physical machine; and
a migration module 920, configured to migrate, based on a QoS requirement for a service instance in the first resource node before the expected execution time, the service instance from the first resource node to a second resource node in a second physical machine among the plurality of physical machines.

In some embodiments, the event information further includes a type of the operation; and the migration module 920 is configured to: determine, based on the type of the operation, that the operation is to cause the QoS of the service instance in the first resource node to fall below the QoS requirement; and migrate the service instance from the first resource node to the second resource node.

In some embodiments, the migration module 920 is configured to: determine that the QoS requirement is greater than or equal to a preset QoS threshold; and migrate the service instance from the first resource node to the second resource node.

In some embodiments, the cloud management platform 900 further includes a prohibition module, configured to prohibit deployment of a new service instance in the first resource node.

In some embodiments, the operation is used to address a hardware fault or change, where the hardware is used by the first physical machine to run the first resource node; or the operation is used to address a software fault or change, where the software includes at least one of an operating system of the first physical machine and management software of the first resource node.

In some embodiments, the service instance in the first resource node includes any one or more of a container, a database instance, and a data warehouse instance.

In some embodiments, the first resource node is a virtual machine or a bare metal server, or the first resource node is the first physical machine.

Both the receiving module 910 and the migration module 920 may be implemented by using software, or may be implemented by using hardware. For example, the following uses the receiving module 910 as an example to describe an implementation of the receiving module 910. Similarly, for an implementation of the migration module 920, refer to the implementation of the receiving module 910.

The module is used as an example of a software functional unit, and the receiving module 910 may include code that is run on a compute instance. The compute instance may include at least one of a physical host (a compute device), a virtual machine, and a container. Further, there may be one or more compute instances. For example, the receiving module 910 may include code that is run on a plurality of hosts/virtual machines/containers. It should be noted that, the plurality of hosts/virtual machines/containers configured to run the code may be distributed in a same region or different regions. Further, the plurality of hosts/virtual machines/containers configured to run the code may be distributed in a same available zone AZ or different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC or a plurality of VPCs. Generally, one VPC is set in one region. A communication gateway needs to be set in each VPC for communication between two VPCs in a same region or between VPCs in different regions. VPCs are interconnected through the communication gateway.

A module is used as an example of a hardware functional unit, and the receiving module 910 may include at least one compute device, for example, a server. Alternatively, the receiving module 910 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

A plurality of compute devices included in the receiving module 910 may be distributed in a same region or different regions. The plurality of compute devices included in the receiving module 910 may be distributed in a same AZ or different AZs. Similarly, the plurality of compute devices included in the receiving module 910 may be distributed in a same VPC or a plurality of VPCs. The plurality of compute devices may be any combination of compute devices such as a server, an ASIC, a PLD, a CPLD, an FPGA, and GAL.

It should be noted that, in another embodiment, the receiving module 910 may be configured to perform any step in the method shown in FIG. 6, and the migration module 920 may be configured to perform any step in the method shown in FIG. 6. Steps to be implemented by the receiving module 910 and the migration module 920 may be specified as required. The receiving module 910 and the migration module 920 separately implement different steps in the method shown in FIG. 6, to implement all functions of the cloud management platform 900.

This application further provides a compute device 1000. As shown in FIG. 10, the compute device 1000 includes a bus 1002, a processor 1004, a memory 1006, and a communication interface 1008. The processor 1004, the memory 1006, and the communication interface 1008 communicate with each other through the bus 1002. The compute device 1000 may be a server or a terminal device. It should be understood that a quantity of processors and a quantity of memories in the compute device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 10 for representation, but it does not indicate that there is only one bus or only one type of bus. The bus 1002 may include a path for information transfer between various components (such as the memory 1006, the processor 1004, and the communication interface 1008) in the compute device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The memory 1006 may further include a non-volatile memory (non-volatile memory), for example, a read-only memory (read-only memory, ROM), a flash storage, a hard disk drive (hard disk drive, HDD), or a solid-state drive (solid-state drive, SSD).

The memory 1006 stores executable program code, and the processor 1004 executes the executable program code to separately implement functions of the receiving module 910 and the migration module 920, so as to implement the method shown in FIG. 6. In other words, the memory 1006 stores instructions for performing the method shown in FIG. 6.

The communication interface 1008 uses a transceiver module, for example but not limited to, a network interface card or a transceiver, to implement communication between the compute device 1000 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

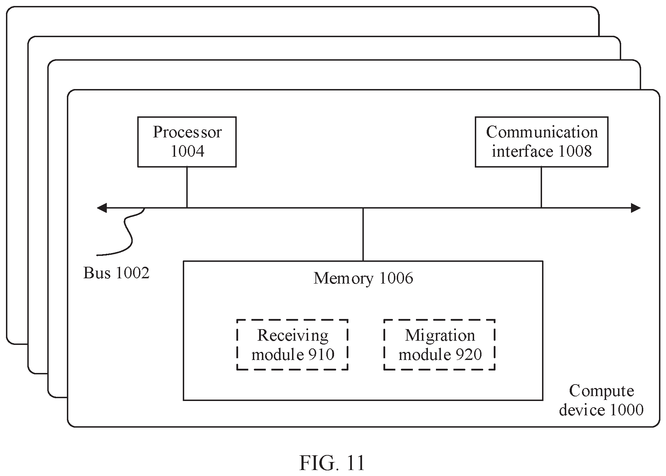

As shown in FIG. 11, the compute device cluster includes at least one compute device 1000. Memories 1006 in one or more compute devices 1000 in the compute device cluster may store same instructions for performing the method shown in FIG. 6.

In some possible implementations, the memory 1006 in one or more compute devices 1000 in the compute device cluster may alternatively separately store a part of the instructions for performing the method shown in FIG. 6. In other words, a combination of the one or more compute devices 1000 may jointly execute the instructions for performing the method shown in FIG. 6.

It should be noted that, memories 1006 in different compute devices 1000 in the compute device cluster may store different instructions, which are respectively used to perform a part of functions of the cloud management platform 900. In other words, the instructions stored in the memories 1006 in the different compute devices 1000 may implement functions of one or more of the receiving module 910 and the migration module 920.

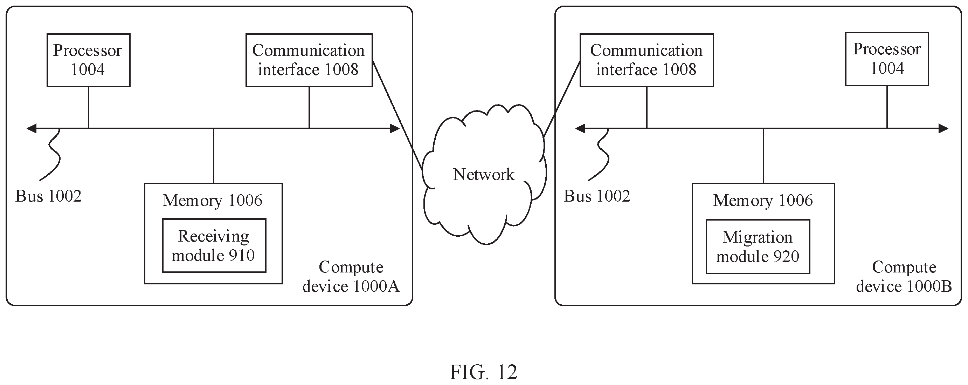

In some possible implementations, the one or more compute devices in the compute device cluster may be connected through a network. The network may be a wide area network, a local area network, or the like. FIG. 12 shows a possible implementation. As shown in FIG. 12, two compute devices 1000A and 1000B are connected through a network. Specifically, each compute device is connected to the network through a communication interface in the compute device. In this possible implementation, a memory 1006 in the compute device 1000A stores instructions for performing a function of the receiving module 910. In addition, the memory 1006 in the compute device 1000B stores instructions for performing a function of the migration module 920.

It should be understood that a function of the compute device 1000A shown in FIG. 12 may alternatively be completed by a plurality of compute devices 1000. Similarly, a function of the compute device 1000B may alternatively be completed by a plurality of compute devices 1000.

An embodiment of this application further provides another compute device cluster. For a connection relationship between compute devices in the compute device cluster, refer to connection manners of the compute device cluster in FIG. 11 and FIG. 12 similarly. A difference lies in that memories 1006 in one or more compute devices 1000 in the compute device cluster may store same instructions for performing the method shown in FIG. 6.

In some possible implementations, the memories 1006 in the one or more compute devices 1000 in the compute device cluster may alternatively separately store a part of the instructions for performing the method shown in FIG. 6. In other words, a combination of the one or more compute devices 1000 may jointly execute the instructions for performing the method shown in FIG. 6.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the method shown in FIG. 6.

An embodiment of this application further provides a computer-readable storage medium. The computer-readable storage medium may be any usable medium that can be stored by a compute device, or a host migration device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a compute device to perform the method shown in FIG. 6.

Finally, it should be noted that the foregoing embodiments are merely intended for describing the technical solutions of this application other than limiting this application. Although this application is described in detail with reference to the foregoing embodiments, persons of ordinary skill in the art shall understand that they may still make modifications to the technical solutions described in the foregoing embodiments or make equivalent replacements to some technical features thereof, without departing from the protection scope of the technical solutions in embodiments of this application.

## Claims

1. A cloud technology-based service instance management method, wherein the method is applied to a cloud management platform connected to cloud infrastructure, the cloud management platform is configured to manage a plurality of service instances deployed in the cloud infrastructure, the cloud infrastructure comprises a plurality of physical machines, each of the plurality of physical machines is configured to deploy one or more resource nodes, each of the plurality of service instances is deployed in at least one resource node in the cloud infrastructure, and quality of service QoS of a service instance is affected by a status of a resource node in which the service instance is located; and the method comprises:
receiving, by the cloud management platform, event information sent by a first physical machine among the plurality of physical machines, wherein the event information comprises an expected execution time of an operation, and the operation affects a status of a first resource node in the first physical machine; and
migrating, by the cloud management platform based on a QoS requirement for a service instance in the first resource node before the expected execution time, the service instance from the first resource node to a second resource node in a second physical machine among the plurality of physical machines.

2. The method according to claim 1, wherein the event information further comprises a type of the operation; and migrating, by the cloud management platform based on the QoS requirement for the service instance in the first resource node, the service instance from the first resource node to the second resource node in the second physical machine among the plurality of physical machines comprises:
determining, by the cloud management platform based on the type of the operation, that the operation is to cause the QoS of the service instance in the first resource node to fall below the QoS requirement; and
migrating, by the cloud management platform, the service instance from the first resource node to the second resource node.

3. The method according to claim 1, wherein migrating, by the cloud management platform based on the QoS requirement for the service instance in the first resource node, the service instance from the first resource node to the second resource node in the second physical machine among the plurality of physical machines comprises:
determining, by the cloud management platform, that the QoS requirement is greater than or equal to a preset QoS threshold; and
migrating, by the cloud management platform, the service instance from the first resource node to the second resource node.

4. The method according to any one of claims 1 to 3, wherein the method further comprises: prohibiting, by the cloud management platform, deployment of a new service instance in the first resource node.

5. The method according to any one of claims 1 to 4, wherein
the operation is used to address a hardware fault or change, wherein the hardware is used by the first physical machine to run the first resource node; or
the operation is used to address a software fault or change, wherein the software comprises at least one of an operating system of the first physical machine and management software of the first resource node.

6. The method according to any one of claims 1 to 5, wherein the service instance in the first resource node comprises any one or more of a container, a database instance, and a data warehouse instance.

7. The method according to any one of claims 1 to 6, wherein the first resource node is a virtual machine or a bare metal server, or the first resource node is the first physical machine.

8. A cloud management platform, wherein the cloud management platform is connected to cloud infrastructure, the cloud management platform is configured to manage a plurality of service instances deployed in the cloud infrastructure, the cloud infrastructure comprises a plurality of physical machines, each of the plurality of physical machines is configured to deploy one or more resource nodes, each of the plurality of service instances is deployed in at least one resource node in the cloud infrastructure, and quality of service QoS of a service instance is affected by a status of a resource node in which the service instance is located; and the cloud management platform comprises:
a receiving module, configured to receive event information sent by a first physical machine among the plurality of physical machines, wherein the event information comprises an expected execution time of an operation, and the operation affects a status of a first resource node in the first physical machine; and
a migration module, configured to migrate, based on a QoS requirement for a service instance in the first resource node before the expected execution time, the service instance from the first resource node to a second resource node in a second physical machine among the plurality of physical machines.

9. The cloud management platform according to claim 8, wherein the event information further comprises a type of the operation, and the migration module is configured to:
determine, based on the type of the operation, that the operation is to cause the QoS of the service instance in the first resource node to fall below the QoS requirement; and
migrate the service instance from the first resource node to the second resource node.

10. The cloud management platform according to claim 8, wherein the migration module is configured to:
determine that the QoS requirement is greater than or equal to a preset QoS threshold; and
migrate the service instance from the first resource node to the second resource node.

11. The cloud management platform according to any one of claims 8 to 10, wherein the cloud management platform further comprises:
a prohibition module, configured to prohibit deployment of a new service instance in the first resource node.

12. The cloud management platform according to any one of claims 8 to 11, wherein
the operation is used to address a hardware fault or change, wherein the hardware is used by the first physical machine to run the first resource node; or
the operation is used to address a software fault or change, wherein the software comprises at least one of an operating system of the first physical machine and management software of the first resource node.

13. The cloud management platform according to any one of claims 8 to 12, wherein the service instance in the first resource node comprises any one or more of a container, a database instance, and a data warehouse instance.

14. The cloud management platform according to any one of claims 8 to 13, wherein the first resource node is a virtual machine or a bare metal server, or the first resource node is the first physical machine.

15. A compute device cluster, comprising at least one compute device, wherein each compute device comprises a processor and a memory; and
a processor in the at least one compute device is configured to execute instructions stored in a memory in the at least one compute device, to enable the compute device cluster to perform the method according to any one of claims 1 to 7.

16. A computer-readable storage medium, comprising computer program instructions, wherein when the computer program instructions are executed by a compute device cluster, the compute device cluster performs the method according to any one of claims 1 to 7.

17. A computer program product comprising instructions, wherein when the instructions are run by a compute device cluster, the compute device cluster is enabled to perform the method according to any one of claims 1 to 7.
